# EUROPEAN PATENT SPECIFICATION

(11) **EP 1 592 905 B1**
(45) Date of publication and mention of the grant of the patent: **04.07.2007**
(21) Application number: 04707334.1
(22) Date of filing: 02.02.2004
(51) Int. Cl.: F16K 31/383, F16K 31/122

(54) **VALVE AND METHOD FOR PROVIDING A FLUID PULSE**
VENTIL UND VERFAHREN ZUR BEREITSTELLUNG EINES FLUIDIMPULSES
SOUPAPE ET PROCEDE DE PRODUCTION D'UNE IMPULSION DE FLUIDE

(30) Priority: 04.02.2003 NL 1022576
(43) Date of publication of application: 09.11.2005
(73) Proprietor: ASCO CONTROLS B.V., 3925 BD Scherpenzeel (NL)
(72) Inventor: OOMEN, Tjerk, NL-3925 BD Scherpenzeel (NL)
(74) Representative: Vernout, Robert
(86) International application number: PCT/NL2004/000075
(87) International publication number: WO 2004/070245

(56) References cited:
- DE-A- 2 343 069
- DE-C- 3 913 990
- GB-A- 1 084 960

## Description

The invention relates to a valve for a fluid, comprising a housing provided with an inlet opening and an outlet opening and a movable valve member which can bear against a valve seat for the purpose of closing the valve, with a control chamber being formed on the side of the movable valve member remote from the valve seat, which control chamber comprises the stroke volume of the valve and which is connected, via a throttle channel, to the inlet opening, and with means being present for allowing fluid to escape from the control chamber for the purpose of opening the valve as a result of the pressure on the part of the other side of the movable valve member, which is in open communication with the inlet opening, moving the movable valve member away from the valve seat, wherein the movable valve member can move along a valve member which is fixedly disposed in the housing, to which end the valve members together have a tubular sliding surface and a complementary annular sliding edge having a corresponding diameter which mates therewith and which forms a seal defining the stroke volume of the valve. Such a valve is known from the German patent publication DE 39 13 990 C.

Such gas valves are used for cleaning dust filters in industrial exhaust systems, for example. Such dust filters become choked with dust during use, which causes the resistance of the dust filter to increase. Such a dust filter can be cleaned by applying a gas pulse in a direction opposed to the direction of the normal gas flow through the dust filter. It is important in this connection that an effective gas pulse can be obtained, to which end a gas valve is needed which can be opened and closed very quickly and which can pass a large amount of gas in a very short period.

The international patent publication WO 96/27095 describes another valve, one feature of which is that opening and/or closing thereof can take place very quickly, so that a large volume of gas can be allowed to pass within a short time, which renders said valve suitable in particular for delivering a short gas pulse. With this valve, the movable valve member comprises a membrane, which seals the control chamber.

The drawback of this valve is that the stroke volume, i.e. the amount of gas that must be discharged from the control chamber for opening the valve, is relatively large. Said stroke volume can be roughly defined as the stroke length of the valve multiplied by the total surface area of the membrane. The very quick discharge of a relatively large amount of gas from the control chamber leads to noise nuisance for the environment, which must be reduced, therefore. Furthermore, the rapid discharge of the amount of gas from the control chamber requires the presence of a control valve on the control chamber on which heavy demands are made. In those cases in which a main valve having large dimensions is used, and consequently a large volume of gas must flow from the control chamber within a short period, a second valve is disposed between the control valve and the main valve, therefore, which second valve is constructed according to the same principle as the main valve, which is a costly solution.

The object of the invention is to provide a valve, in particular for delivering a gas pulse, which is more compact, which operates more efficiently, which can open and/or close more quickly and/or in which a smaller amount of gas is needed for opening and/or closing the valve.

In order to accomplish that objective the stroke volume of the valve is further defined by a second seal formed by the valve members together having a second tubular sliding surface having a different diameter than the first sliding surface and a second complementary annular sliding edge having a correspondingly different diameter which mates therewith, wherein the valve seat is positioned between the sliding surface having the smaller diameter and the sliding surface having the larger diameter. Thus the space between the larger sliding surface and the smaller sliding surface, which varies in length during the stroke, forms an annular stroke volume, which is much smaller than the disc-shaped stroke volume of the known valve, given an identical stroke length of the valve. As a result, the volume being displaced is much smaller, so that the drawbacks referred to above in connection therewith are at least partially obviated.

In a preferred embodiment, the two tubular sliding surfaces are present on the movable valve member, preferably, said two tubular sliding surfaces are the internal surfaces. Within the framework of the invention, however, any other combination is also possible, for example a combination in which one of the tubular sliding surfaces is present on the movable valve member, whilst the other is present on the fixed valve member.

Preferably, the smaller diameter amounts to 0.4 - 0.9, more preferably 0.5 - 0.8, even more preferably 0.6 - 0.7 times the large larger diameter. Likewise preferably, the area between the sliding surface having the smaller diameter and the centre of the edge of the valve seat is 0.3 - 0.7, more preferably 0.4 - 0.6 times the area between the two sliding surfaces, seen in axial direction. It has become apparent that an optimum equilibrium more forces with a minimum displacement volume is possible when these ratios are used.

Preferably, the tubular sliding surfaces are interconnected by means of a fluid-tight connecting member. Preferably, the tubular surfaces of the movable valve member are made up of two sleeves, the sleeve having the smaller diameter being shorter in length and being positioned within the sleeve having the larger diameter, said sleeves being interconnected on the side of the valve seat by means of the connecting member, said connecting member comprising an annular stop which can bear against the valve seat. In this way a functional, light-weight, movable valve member is obtained.

Preferably, the movable valve member comprises a surface located in the area between the valve seat and the sliding surface having the larger diameter, seen in axial direction, on which the fluid present in the inlet opening can exert a net force, in a direction away from the valve seat, in the closed position of the valve, after fluid has been allowed to escape from the control chamber. In this way the opening of the valve can be initiated in a simple manner when the pressure in the control chamber drops below the pressure in the inlet opening.

Preferably, the movable valve member comprises a surface located in the area between the valve seat and the sliding surface having the smaller diameter, on which the fluid present in the control chamber can exert a net force in the direction of the valve seat in the closed position of the valve. In this way the valve can be kept in its closed position when the pressure in the control chamber is as high as the pressure in the inlet opening and lower than the pressure in the outlet opening.

Preferably, the movable valve member is pressed against the valve seat by biassing means in the absence of a fluid pressure. Preferably, said biassing means comprise a spring which is supported on the fixed valve member on the one hand and on the movable valve member on the other hand. As a result, the valve will be in its closed position in the absence of a pressure difference.

Preferably, said annular sliding edges are provided on two flanges extending from the control chamber into the housing. Since the annular sliding edges are present on the flanges, and not on massive cylinders, for example, a saving in material is achieved, so that the valve will be lighter in weight. Likewise preferably, said annular sliding edges are formed by flexible sealing rings, so that no fluid can escape from the control chamber past said sliding edges.

The invention also relates to a method for providing a fluid pulse by quickly opening and/or closing a valve, wherein a movable valve member is moved away from a valve seat by the fluid supply pressure as a result of the fluid pressure on the other side of the movable valve member being reduced, after which the medium can flow between the movable valve member and the valve seat, wherein the movable valve member is moved along a fixedly disposed valve member, to which end the valve members together comprise two tubular sliding surfaces having mutually different diameters, which mate with two complementary, annular sliding edges having corresponding mutually different diameters, wherein the valve seat is positioned between the sliding surface having the smaller diameter and the sliding surface having the larger diameter.

The invention will now be explained in more detail by means of embodiments thereof as shown in the figures, in which:
Fig. 1 is a sectional view of a gas valve in the closed position thereof;
Fig. 2 is a sectional view of the gas valve of Fig. 1 in the open position thereof;
Fig. 3 is a sectional view of an alternative embodiment of a gas valve in the closed position thereof;
Fig. 4 shows a detail of the sectional view of Fig. 1; and
Fig. 5 is a sectional view of another alternative embodiment of a gas valve in the closed position thereof.

The figures are merely schematic representations of the embodiments, in which like parts are indicated by the same numerals in the various figures.

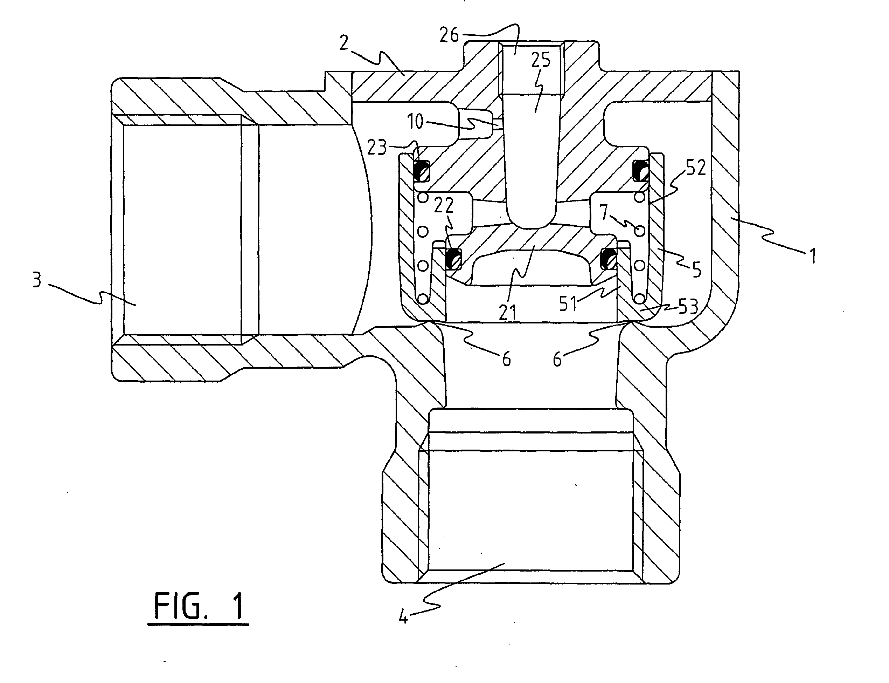

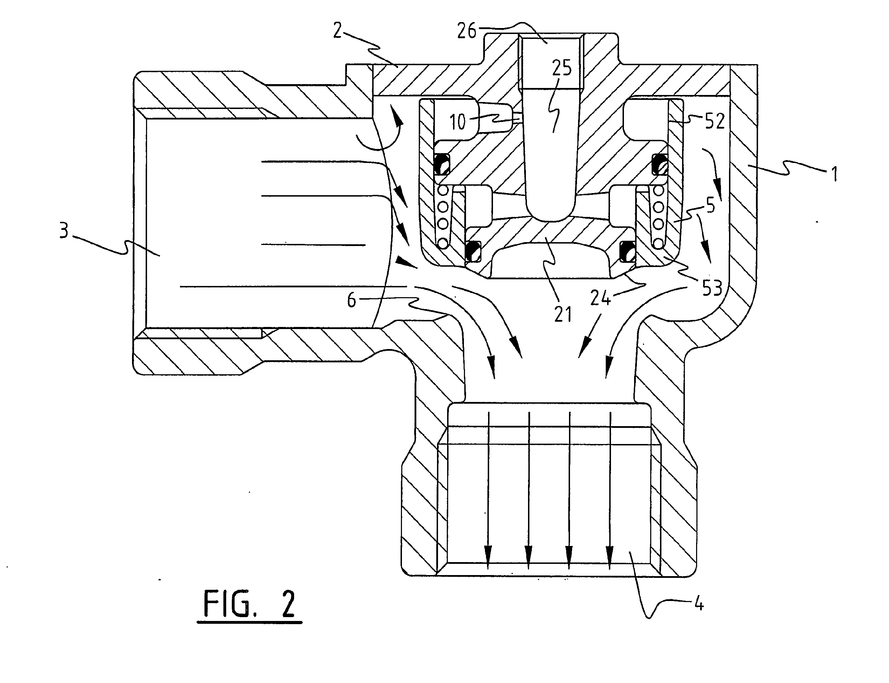

Fig. 1 and Fig. 2 show the various parts of the gas valve in sectional view. The gas valve has a housing consisting of a valve casing 1 and a cover 2. The valve casing 1 is provided with a gas inlet opening 3 and a gas outlet opening 4. Both openings are provided with connecting means, so that gas pipes can be connected thereto. In the illustrated embodiment, said means consist of internal screw thread in the openings 3, 4, so that an externally threaded end of a pipe can be screwed into said openings. A gastight seal can be obtained by selecting the correct type of screw thread or by applying a sealant thereto.

In the position of the gas valve that is shown in Fig. 1, said gas valve is closed, and a valve member 5 bears against the valve seat 6. The movable valve member 5 comprises two cylindrical parts, viz. an inner cylinder having a cylindrical internal surface 51 and an outer cylinder having a cylindrical internal surface 52, which are connected at the bottom side by means of an annular stop 53. The upper side of the inner internal surface 51 extends about half as high as the upper side of the outer internal surface 52.

The valve member 5 is movably mounted on a fixed valve member or valve holder 21, which is integral with the cover 2. In an alternative embodiment (not shown), the valve holder 21 is a separate part made of plastic material, which is clamped between the cover 2 and the valve casing 1 via a flange. The valve holder 21 comprises a lower flange comprising a sealing ring of plastic material having an outer edge 22 and an upper flange comprising a sealing ring of plastic material having an outer edge 23. The diameter of the lower outer edge 22 corresponds to that of the internal surface 51, and the diameter of the upper outer edge 23 corresponds to that of the internal surface 52. In this way, the cylindrical internal surfaces 51, 52 of the movable valve member are capable of gastight, sliding movement in vertical direction over the respective annular outer edges 22, 23. The uppermost position of the valve member 5 is defined by the upper side of the inner cylinder or the outer cylinder bearing against, respectively, the upper flange or the cover 2. In the present embodiment, the dimensions have been selected so that the two cylinders at least substantially bear against their respective boundaries, as is shown in Fig. 2.

Fig. 2 also shows that the bottom side 24 of the valve holder 21 is configured such that it joins the stop collar 53 in the open position of the valve, said bottom side and said stop collar jointly forming a guide for the gas flow (indicated by means of arrows) from the inlet opening 3 towards the outlet opening 4.

The outer side and the bottom side of the valve member 5, in so far as it extends beyond the valve seat 6, is in direct contact with the gas inlet opening 3, so that the gas pressure of the gas being supplied prevails on this side of the valve member. Present on the other side of the valve member, in the valve holder 21 (the fixed valve member), is a control chamber 21, which furthermore comprises the annular stroke volume of the valve between the fixed valve member and the movable valve member. Present within said annular stroke volume is furthermore a spring 7, which bears against the fixed valve member 21 on one side and which is capable of pressing the movable valve member 5 against the valve seat 6. The control chamber 25 is connected to the gas inlet opening by means of a throttle channel 10. At the upper side, the control chamber 25 is provided with a connecting opening 26, via which the control chamber 25 can be connected to a control device (not shown), for example a control valve. Said control device (not shown) is capable of closing the connecting opening 26, so that no gas can pass therethrough, and of allowing gas to escape from the control chamber via the connecting opening so as to open the gas valve.

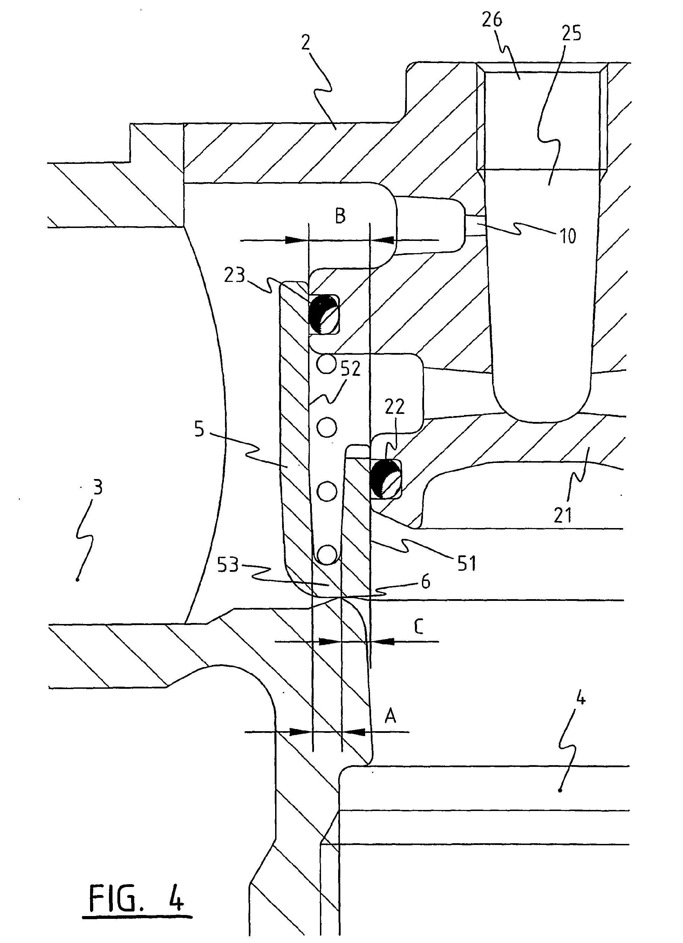

The operation of the gas valve that is shown in Figs. 1 and 2 will now be explained with reference to Fig. 4. As long as the gas flow via the connecting opening 26 is blocked, the gas valve will be closed as a result of the movable valve member 5 bearing against the valve seat 6. The gas supply pressure in the gas inlet opening 3 is higher than the gas pressure in the gas outlet opening 4 in that position. The gas supply pressure not only prevails in the gas inlet opening 3, but also in the control chamber 25, which is connected to the gas inlet opening via the throttle channel 10. As long as the connecting opening 26 is closed, the resultant of the forces exerted on the movable valve member (being the supply gas pressure minus the discharge gas pressure exerted on the surface C of the upper side of the valve) will be directed downwards, so that the gas valve will be in its closed position. The gas valve can be opened by allowing gas to escape from the control chamber via the connecting opening 26, so that the gas pressure in the control chamber 25 will fall out. The resultant of the force exerted on the movable valve disk 5 (being the supply gas pressure exerted on the surface A of the bottom side of the valve) will be directed upwards, so that the valve will open against the spring pressure of the spring 7. The amount of gas that can be supplied via the throttle channel 10 is not large enough for building up sufficient pressure in the control chamber 25, so that the supply gas pressure exerted on the bottom side of the movable valve member 5 (over the entire area B) will keep the gas valve in its open position until the discharge of gas via the connecting opening 26 is stopped, so that a pressure will build up in the control chamber 25 again as a result of gas being supplied to the control chamber 25 via the throttle channel 10. In that situation, the same gas pressure prevails on either side of the movable valve member 5, as a result of which the valve member 5 will be closed again under the influence of the spring force of the spring 7.

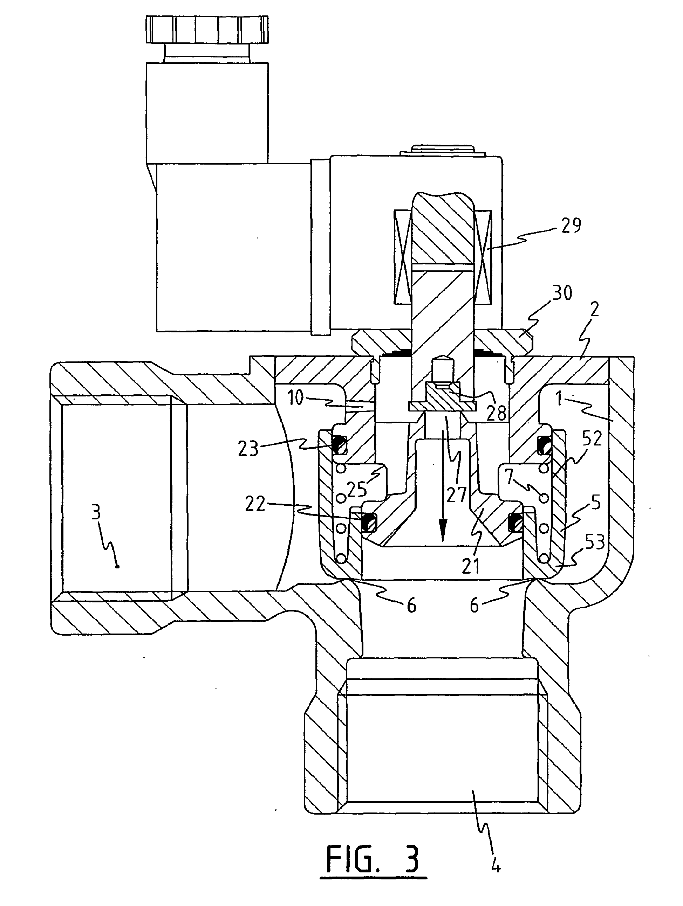

Fig. 3 shows an alternative embodiment of the gas valve, in which an opening 27 is present in the fixed valve member 21, between the control chamber 25 and the gas outlet opening 4. Said opening 27 has the same function as the connecting opening 26, viz. allowing the gas in the control chamber 25 to escape by releasing the opening; in this embodiment, however, the gas flows to the gas outlet opening 4. As a result, a separate outlet at the upper side of the valve is not required, whilst in addition the noise level produced thereby is reduced. The opening 27 is closed by an operating mechanism 28, which is actuated by an electromagnet 29, which is mounted in the cover 2 via a screw member 30.

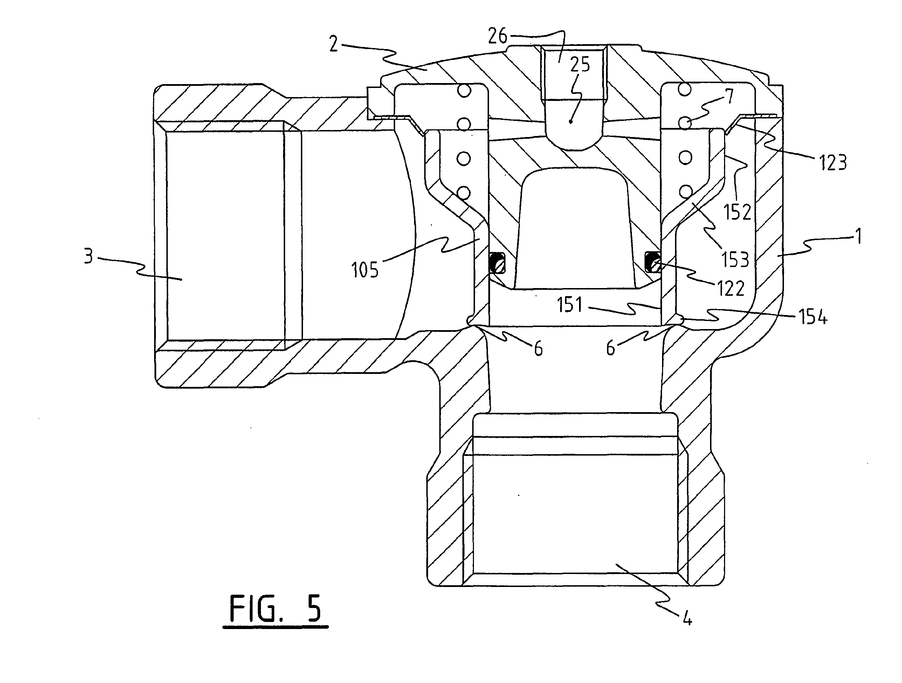

Figure 5 shows an alternative embodiment of a gas valve with a movable valve member 105 comprising two cylindrical parts, the lower cylinder having a cylindrical internal surface 151 and the upper cylinder having a cylindrical external surface 152, which are connected in the centre by means of an annular connecting member 153. The bottom side of the lower cylindrical part is provided with an annular stop 154, which can bear against the valve seat 6.

In this embodiment, a flexible sealing ring 23 is clamped between the cover 2 and the valve casing 1, which sealing ring is preferably made of a Teflon-containing plastic. The sealing ring 23 has an annular inner edge, over which the cylindrical external surface 152 can slide, forming a gastight seal therewith. The sealing ring is provided with a hole (not shown), which functions as a throttle channel similar to the throttle channel 10 in the preceding embodiments. A plastic sealing ring having an outer edge 122 is provided at the bottom side of the valve all the 121, on the outer side thereof, over which sealing ring the cylindrical in a surface 151 can slide, likewise forming a gastight seal therewith. The spring 7 is supported on the cover 2 at its upper side, and on the connecting member 153 at its bottom side. For the rest, the operation of the gas valve according to this embodiment is similar to that of the preceding embodiment, and consequently it requires no further explanation.

The embodiments as described therein are to be considered as exemplary embodiments, and it will be apparent to a person skilled in the art who has become acquainted with the invention that many variations in the implementation of the invention are possible.

## Claims

1. A valve for a fluid, comprising a housing (1, 2) provided with an inlet opening (3) and an outlet opening (4) and a movable valve member (5, 105) which can bear against a valve seat (6) for the purpose of closing the valve, with a control chamber (25) being formed on the side of the movable valve member (5, 105) remote from the valve seat (6), which control chamber (25) comprises the stroke volume of the valve and which is connected, via a throttle channel (10), to the inlet opening (3), and with means (26, 27, 28, 29) being present for allowing fluid to escape from the control chamber (25) for the purpose of opening the valve as a result of the pressure on the part of the other side of the movable valve member (5, 105), which is in open communication with the inlet opening (3), moving the movable valve member (5, 105) away from the valve seat (6), wherein the movable valve member (5, 105) can move along a valve member (21, 121) which is fixedly disposed in the housing, to which end the valve members (5, 105; 21, 121) together have a tubular sliding surface (51, 151; 52, 152) and a complementary annular sliding edge (22, 122; 23, 123) having a corresponding diameter which mates therewith and which forms a seal defining the stroke volume of the valve, **characterized in that** the stroke volume of the valve is further defined by a second seal formed by the valve members (5, 105; 21, 121) together having a second tubular sliding surface (51, 151; 52, 152) having a different diameter than the first sliding surface and a second complementary annular sliding edge (22, 122; 23, 123) having a correspondingly different diameter, which mates therewith, wherein the valve seat (6) is positioned between the sliding surface (51, 151) having the smaller diameter and the sliding surface (52, 152) having the larger diameter.

2. A valve according to claim 1, **characterized in that** the two tubular sliding surfaces (51, 151; 52, 152) are present on the movable valve member (5, 105).

3. A valve according to claim 1 or 2, **characterized in that** said two tubular sliding surfaces (51; 52) are internal surfaces.

4. A valve according to any one of the preceding claims 1 - 3, **characterized in that** the sliding surface (51, 151) having the smaller diameter is positioned closer to the valve seat (6) than the sliding surface (52, 152) having the larger diameter.

5. A valve according to any one of the preceding claims 1 - 4, **characterized in that** the smaller diameter amounts to 0.4 - 0.9, preferably 0.5 - 0.8, more preferably 0.6 - 0.7 times the large larger diameter.

6. A valve according to any one of the preceding claims 1 - 5, **characterized in that** the area between the sliding surface (51, 151) having the smaller diameter and the centre of the edge of the valve seat (6) is 0.3 - 0.7, more preferably 0.4 - 0.6 times the area between the two sliding surfaces (51, 151; 52, 152), seen in axial direction.

7. A valve according to any one of the preceding claims 1 - 6, **characterized in that** the tubular sliding surfaces (51, 151; 52, 152) are interconnected by means of a fluid-tight connecting member (53, 153).

8. A valve according to claim 7, **characterized in that** said tubular sliding surfaces (51, 52) are present on the movable valve member (5) and are made up of two sleeves, the sleeve having the smaller diameter being shorter in length and being positioned within the sleeve having the larger diameter, said sleeves being interconnected on the side of the valve seat by means of the connecting member (53), said connecting member (53) comprising an annular stop which can bear against the valve seat (6).

9. A valve according to any one of the preceding claims 1 - 8, **characterized in that** the movable valve member (5, 105) comprises a surface located in the area (A) between the valve seat (6) and the sliding surface (52, 152) having the larger diameter, seen in axial direction, on which the fluid present in the inlet opening (3) can exert a net force, in a direction away from the valve seat (6), in the closed position of the valve, after fluid has been allowed to escape from the control chamber (25).

10. A valve according to any one of the preceding claims 1 - 9, **characterized in that** the movable valve member (5, 105) comprises a surface located in the area (C) between the valve seat (6) and the sliding surface (51) having the smaller diameter, seen in axial direction, on which the fluid present in the control chamber (25) can exert a net force in the direction of the valve seat (6) in the closed position of the valve.

11. A valve according to any one of the preceding claims 1-10, **characterized in that** the movable valve member (5, 105) is pressed against the valve seat (6) by biassing means (7) in the absence of a fluid pressure.

12. A valve according to any one of the preceding claims 1 - 11, **characterized in that** said biassing means (7) comprise a spring which is supported on the fixed valve member (21) or the housing (1, 2) on the one hand and on the movable valve member (5, 105) on the other hand.

13. A valve according to any one of the preceding claims 1 - 12, **characterized in that** said annular sliding edges (22; 23) are provided on two flanges.

14. A valve according to any one of the preceding claims 1 - 13, **characterized in that** said annular sliding edges (22, 122; 23, 123) are formed by flexible sealing rings.

15. A valve according to any one of the preceding claims 1 - 14, **characterized in that** the means for allowing fluid to escape from the control chamber (25) for the purpose of opening the valve comprise a control valve (28) which is capable of allowing the fluid to escape from the control chamber (25) to the outlet opening (4).

16. A method for providing a fluid pulse by quickly opening and/or closing a valve, wherein a movable valve member (5, 105) is moved away from a valve seat (6) by the fluid supply pressure as a result of the fluid pressure on the other side of the movable valve member (5, 105) being reduced, after which the medium can flow between the movable valve member (5, 105) and the valve seat (6), wherein the movable valve member (5, 105) is moved along a fixedly disposed valve member, to which end the valve members (5, 105; 21, 121) together comprise a tubular sliding surface (51, 151; 52, 152) which mates with a complementary annular sliding edge (22, 122; 23, 123) having a corresponding diameter and which forms a seal defining the stroke volume of the valve, **characterized in that** the stroke volume is further defined by a second seal formed by the valve members (5, 105; 21, 121) together having a second tubular sliding surface (51, 151; 52, 152) having a different diameter than the first sliding surface and a second complementary annular sliding edge (22, 122; 23, 123) having a correspondingly different diameter which mates therewith, wherein the valve seat (6) is positioned between the sliding surface (51, 151) having the smaller diameter and the sliding surface (52, 152) having the larger diameter.

## Patentansprüche

1. Ein Ventil für ein Fluid mit einem Gehäuse (1, 2), das eine Einlassöffnung (3) und eine Auslassöffnung (4) sowie ein bewegliches Ventilbauelement (5, 105) umfasst, das zum Schließen des Ventils an einem Ventilsitz (6) anliegen kann, wobei an der vom Ventilsitz (6) entfernten Seite des beweglichen Ventilbauelements (5, 105) eine Steuerungskammer (25) ausgebildet ist, die das Hubvolumen des Ventils umfasst und durch einen Drosselkanal (10) an die Einlassöffnung (3) angeschlossen ist, und wobei Mittel (26, 27, 28, 29) vorgesehen sind, um dem Fluid das Entweichen aus der Steuerungskammer (25) zu ermöglichen, zwecks Öffnen des Ventils folglich des Drucks auf dem Teil der anderen Seite des in offener Verbindung mit der Einlassöffnung (3) stehenden beweglichen Ventilbauelements (5, 105), wodurch das bewegliche Ventilbauelement (5, 105) vom Ventilsitz (6) weg bewegt wird, wobei das bewegliche Ventilbauelement (5, 105) sich entlang eines fest im Gehäuse angebrachten Ventilbauelements (21, 121) bewegen kann, wozu die Ventilbauelemente (5, 105, 21, 121) zusammen eine rohrförmige Gleitoberfläche (51, 151; 52, 152) und eine komplementäre ringförmige Gleitkante (22, 122; 23, 123) entsprechenden Durchmessers aufweisen, die damit zusammenwirkt und eine das Ventilhubvolumen bestimmende Dichtung bildet, **dadurch gekennzeichnet, dass** das Hubvolumen des Ventils ferner durch eine zweite Dichtung bestimmt wird, die **dadurch** gebildet wird, dass die Ventilbauelemente (5, 105; 1, 121) zusammen eine zweite rohrförmige Gleitoberfläche (51, 151; 52, 152) mit einem sich vom Durchmesser der ersten Gleitoberfläche unterscheidenden Durchmesser und eine zweite komplementäre ringförmige Gleitkante (22, 122; 23,123) eines entsprechend unterschiedlichen Durchmessers aufweisen, mit der sie zusammenwirkt, wobei der Ventilsitz (6) zwischen der Gleitoberfläche (51, 151) mit dem kleineren Durchmesser und der Gleitoberfläche (52, 152) mit dem größeren Durchmesser angeordnet ist.

2. Ventil nach Anspruch 1, **dadurch gekennzeichnet, dass** die beiden rohrförmigen Gleitoberflächen (51, 151; 52, 152) am beweglichen Ventilbauelement (5, 105) vorgesehen sind.

3. Ventil nach Anspruch 1 oder 2, **dadurch gekennzeichnet, dass** die beiden genannten rohrförmigen Gleitoberflächen (51, 52) innere Oberflächen sind.

4. Ventil nach einem der vorstehenden Ansprüche 1 bis 3, **dadurch gekennzeichnet, dass** die Gleitoberfläche (51, 151) mit dem kleineren Durchmesser näher am Ventilsitz (6) als die Gleitoberfläche (52. 152) mit dem größeren Durchmesser angeordnet ist.

5. Ventil nach einem der vorstehenden Ansprüche 1 bis 4, **dadurch gekennzeichnet, dass** der kleinere Durchmesser das 0,4- bis 0,9-fache, besser das 0,5- bis 0,8-fache und bevorzugt das 0,6- bis 0,7-fache des großen größeren Durchmessers beträgt.

6. Ventil nach einem der vorstehenden Ansprüche 1 bis 5, **dadurch gekennzeichnet, dass** in axialer Richtung gesehen der Bereich zwischen der Gleitoberfläche (51, 151) mit dem kleineren Durchmesser und die Kantenmitte des Ventilsitzes (6) das 0,3- bis 0,7-fache, bevorzugt das 0,4- bis 0,6-fache des Bereichs zwischen den beiden Gleitoberflächen (51, 151; 52, 152) beträgt.

7. Ventil nach einem der vorstehenden Ansprüche 1 bis 6, **dadurch gekennzeichnet, dass** die rohrförmigen Gleitoberflächen (51, 151; 52, 152) durch ein fluiddichtes Verbindungselement (53, 153) miteinander verbunden sind.

8. Ventil nach Anspruch 7, **dadurch gekennzeichnet, dass** die genannten rohrförmigen Gleitoberflächen (51, 52) am beweglichen Ventilbauelement (5) vorgesehen sind und sich aus zwei Muffen zusammensetzen, wobei die Muffe mit dem kleineren Durchmesser kürzer und in der Muffe mit dem größeren Durchmesser positioniert ist und die Muffen seitlich am Ventilsitz durch das Verbindungselement (53) miteinander verbunden sind, und das Verbindungselenlent (53) einen ringförmigen Ansclllag umfasst, der am Ventilsitz (6) anliegen kann.

9. Ventil nach einem der vorstehenden Ansprüche 1 bis 8, **dadurch gekennzeichnet, dass** das bewegliche Ventilbauelement (5, 105) eine Oberfläche aufweist, die sich in axialer Richtung gesehen im Bereich (A) zwischen dem Ventilsitz (6) und der Gleitoberfläche (52, 152) mit dem größeren Durchmesser befindet, auf welcher Oberfläche das in der Einlassöffnung (3) vorhandene Fluid bei geschlossener Stellung des Ventils nach Ablassen von Fluid aus der Steuerungskammer (25) eine Nutzkraft in einer vom Ventilsitz (6) abgewandten Richtung anwenden kann.

10. Ventil nach einem der vorstehenden Ansprüche 1 bis 9, **dadurch gekennzeichnet, dass** das bewegliche Ventilbauelement (5, 105) eine sich in axialer Richtung gesehen im Bereich (C) zwischen dem Ventilsitz (6) und der Gleitoberfläche (51) kleineren Durchmessers befindliche Oberfläche umfasst, auf welche das in der Steuerungskammer (25) vorhandene Fluid bei geschlossener Ventilstellung eine Nutzkraft in Richtung des Ventilsitzes (6) ausüben kann.

11. Ventil nach einem der vorstehenden Ansprüche 1 bis 10, **dadurch gekennzeichnet, dass** das bewegliche Ventilbauelelnent (5, 105) bei fehlendem Fluiddruck durch Vorspannungsmittel (7) gegen den Ventilsitz (6) gedrückt wird.

12. Ventil nach einem der vorstehenden Ansprüche 1 bis 11., **dadurch gekennzeichnet, dass** die genannten Vorspannungsmittel (7) eine Feder umfassen, die einerseits auf dem feststehenden Ventilbauelement (21) oder dem Gehäuse (1, 2) und andererseits auf dem beweglichen Ventilbauelement (5, 105) lagert.

13. Ventil nach einem der vorstehenden Ansprüche 1 bis 12, **dadurch gekennzeichnet, dass** die ringförmigen Gleitkanten (22; 23,) an zwei Flanschen vorgesehen sind.

14. Ventil nach einem der vorstehenden Ansprüche 1 bis 13, **dadurch gekennzeichnet, dass** die ringförmigen Gleitkanten (22, 122; 23, 123) durch flexible Dichtringe gebildet werden.

15. Ventil nach einem der vorstehenden Ansprüche 1 bis 14, **dadurch gekennzeichnet, dass** die Mittel zum Ermöglichen der Fluidentweichung aus der Steuerungskammer (25) zwecks Öffnen des Ventils ein Regelventil (28) umfassen, das dem Fluid das Entweichen aus der Steuerungskammer (25) zur Auslassöffnung (4) ermöglichen kann.

16. Verfahren zur Bereitstellung eines Fluidpulses durch schnelles Öffnen und/oder Schließen eines Ventils, bei dem ein bewegliches Ventilbauelement (5, 105) durch den Gaszufuhrdruck folglich einer Reduzierung des Fluiddrucks auf der anderen Seite des beweglichen Ventilbauelement (5, 105) vom Ventilsitz (6) wegbewegt wird, woraufhin das Medium zwischen dem Ventilbauelement (5, 105) und dem Ventilsitz (6) strömen kann; bei dem das bewegliche Ventilbauelement (5,105) an einem fest angebrachten Ventilbauelement (5, 105) entlang bewegt wird, wozu die Ventilbauelemente (5, 105; 21, 121) zusammen eine rohrförmige Gleitoberfläche (51, 151, 52, 152) umfassen, die mit einer komplementären ringförmigen Gleitkante (22,122; 23, 123) zusammenwirkt, welche einen entsprechenden Durchmesser aufweist und eine das Hubvolumen des Ventils bestimmende Dichtung bildet, **dadurch gekennzeichnet, dass** das Hubvolumen ferner durch eine zweite Dichtung bestimmt wird, die durch Ventilbauelemente (5, 105; 21, 121) zusammen mit einer zweiten rohrförmigen Gleitoberfläche (51, 151; 52, 152), deren Durchmesser sich von dem der ersten Gleitoberfläche unterscheidet, und eine damit zusammenwirkende zweite ergänzende ringförmige Gleitkante (22, 122; 23, 123) mit einem entsprechend unterschiedlichen Durchmesser gebildet wird, wobei der Ventilsitz (6) zwischen der Gleitoberfläche (51, 151) mit dem kleineren Durchmesser und der Gleitoberfläche mit dem größeren Durchmesser (52, 152) angeordnet ist.

## Revendications

1. Soupape destinée à un fluide, comprenant un boîtier (1, 2) ayant une ouverture d'entrée (3) et une ouverture de sortie (4) et un organe obturateur mobile (5, 105) qui peut prendre appui contre un siège de soupape (6) pour fermer la soupape, une chambre de commande (25) étant formée du côté de l'organe obturateur mobile (5, 105) distant du siège de soupape (6), la chambre de commande (25) forme le volume de la course de déplacement de l'obturateur et est raccordée, par un canal d'étranglement (10), à l'ouverture d'entrée (3), un dispositif (26, 27, 28, 29) étant présent afin qu'il permette au fluide de s'échapper de la chambre de commande (25) pour l'ouverture de la soupape sous l'action de la pression exercée sur la partie de l'autre côté de l'organe obturateur mobile (5, 105), qui est en communication libre avec l'ouverture d'entrée (3), par déplacement de l'organe obturateur mobile (5, 105) à distance du siège de soupape (6), et dans lequel l'organe obturateur mobile (5, 105) peut se déplacer le long de l'organe obturateur (21, 121) qui est disposé en position fixe dans le boîtier, les organes obturateurs (5, 105 ; 21, 121) ayant ensemble à cet effet une surface tubulaire (51, 151 ; 52, 152) de glissement et un bord annulaire complémentaire (22, 122 ; 23, 123) de glissement ayant un diamètre correspondant qui lui correspond et qui forme un joint étanche délimitant le volume de la course de la soupape, **caractérisé en ce que** le volume de la course de la soupape est en outre délimité par un second joint d'étanchéité formé par les organes obturateurs (5, 105 ; 21, 121) avec une seconde surface tubulaire (51, 151 ; 52, 152) de glissement ayant un diamètre différent de la première surface de glissement et un second bord annulaire complémentaire (22, 122 ; 23, 123) de glissement ayant un diamètre différent de manière correspondante, qui sont en coopération, dans laquelle le siège de soupape (6) est disposé entre la surface de glissement (51, 151) ayant un petit diamètre et la surface de glissement (52, 152) ayant un grand diamètre.

2. Soupape selon la revendication 1, **caractérisée en ce que** les deux surfaces tubulaires (51, 151 ; 52, 152) de glissement sont présentes sur l'organe obturateur mobile (5, 105).

3. Soupape selon la revendication 1 ou 2, **caractérisée en ce que** les deux surfaces tubulaires (51 ; 52) de glissement sont des surfaces internes.

4. Soupape selon l'une quelconque des revendications 1 à 3, **caractérisée en ce que** la surface de glissement (51, 151) de petit diamètre est disposée plus près du siège de soupape (6) que la surface de glissement (52, 152) de grand diamètre.

5. Soupape selon l'une quelconque des revendications précédentes 1 à 4, **caractérisée en ce que** le petit diamètre est compris entre 0,4 et 0,9 fois, de préférence entre 0,5 et 0,8 fois, et plus avantageusement entre 0,6 et 0,7 fois le grand diamètre.

6. Soupape selon l'une quelconque des revendications précédentes 1 à 5, **caractérisée en ce que** la surface comprise entre la surface de glissement (51, 151) de petit diamètre et le centre du bord du siège de soupape (6) est comprise entre 0,3 et 0,7 fois, de préférence entre 0,4 et 0,6 fois, la surface comprise entre les deux surfaces de glissement (51, 151 ; 52, 152) vue en direction axiale.

7. Soupape selon l'une quelconque des revendications précédentes 1 à 6, **caractérisée en ce que** les surfaces tubulaires (51, 151 ; 52, 152) de glissement sont interconnectées par un organe de raccordement (53, 153) étanche au fluide.

8. Soupape selon la revendication 7, **caractérisée en ce que** les surfaces tubulaires (51, 52) de glissement sont présentes sur l'organe obturateur mobile (5) et sont constituées de deux manchons, le manchon ayant le petit diamètre ayant une longueur inférieure à celle du manchon de grand diamètre et étant disposé dans ce dernier manchon, les manchons étant interconnectés du côté du siège de soupape par l'organe de raccordement (53), l'organe de raccordement (53) comprenant un organe annulaire d'arrêt qui peut être en appui contre le siège de soupape (6).

9. Soupape selon l'une quelconque des revendications 1 à 8, **caractérisée en ce que** l'organe obturateur mobile (5, 105) comporte une surface placée dans la région (A) comprise entre le siège de soupape (6) et la surface de glissement (52, 152) de grand diamètre, vue en direction axiale, sur laquelle le fluide présent dans l'ouverture d'entrée (3) peut exercer une force résultante en direction opposée à celle du siège de soupape (6), dans la position de fermeture de la soupape, après que le fluide a pu s'échapper de la chambre de commande (25).

10. Soupape selon l'une quelconque des revendications précédentes 1 à 9, **caractérisée en ce que** l'organe obturateur mobile (5, 105) comporte une surface disposée dans la région (C) comprise entre le siège de soupape (6) et la surface de glissement (51) de petit diamètre, vue en direction axiale, sur laquelle le fluide présent dans la chambre de commande (25) peut exercer une force résultante dans la direction du siège de soupape (6) dans la position de fermeture de la soupape.

11. Soupape selon l'une quelconque des revendications précédentes 1 à 10, **caractérisée en ce que** l'organe obturateur mobile (5, 105) est repoussé contre le siège de soupape (6) par un dispositif de rappel (7) en l'absence de pression de fluide.

12. Soupape selon l'une quelconque des revendications précédentes 1 à 11, **caractérisée en ce que** le dispositif de rappel (7) comporte un ressort qui est supporté sur l'organe obturateur fixe (21) ou le boîtier (1, 2) d'une part et sur l'organe obturateur mobile (5, 105) d'autre part.

13. Soupape selon l'une quelconque des revendications précédentes 1 à 12, **caractérisée en ce que** les bords annulaires de glissement (22 ; 23) sont disposés sur deux flasques.

14. Soupape selon l'une quelconque des revendications précédentes 1 à 13, **caractérisée en ce que** les bords annulaires de glissement (22, 122 ; 23, 123) sont formés par des bagues souples d'étanchéité.

15. Soupape selon l'une quelconque des revendications précédentes 1 à 14, **caractérisée en ce que** le dispositif destiné à permettre au fluide de s'échapper de la chambre de commande (25) pour l'ouverture de la soupape comporte une soupape de commande (28) qui peut autoriser le fluide à s'échapper de la chambre de commande (25) vers l'ouverture de sortie (4).

16. Procédé de création d'une impulsion de fluide par ouverture et/ou fermeture rapides d'une soupape, dans laquelle un organe obturateur mobile (5, 105) est écarté d'un siège de soupape (6) par la pression d'alimentation en fluide à la suite de la réduction de la pression du fluide de l'autre côté de l'organe obturateur mobile (5, 105), à la suite de quoi le fluide peut s'écouler entre l'organe obturateur mobile (5, 105) et le siège de soupape (6), et dans laquelle l'organe obturateur mobile (5, 105) est déplacé le long d'un organe obturateur de position fixe, les organes obturateurs (5, 105 ; 21, 121) comprenant ensemble à cet effet une surface tubulaire de glissement (51, 151 ; 52, 152) qui coopère avec un bord annulaire complémentaire de glissement (22, 122 ; 23, 123) ayant un diamètre correspondant et qui forme un joint étanche délimitant le volume de la course de la soupape,
**caractérisé en ce que** le volume de la course est en outre délimité par un second joint d'étanchéité formé par les organes obturateurs (5, 105 ; 21, 121) qui ont ensemble une seconde surface tubulaire de glissement (51, 151 ; 52, 152) ayant un diamètre différent de celui de la première surface de glissement et un second bord annulaire complémentaire de glissement (22, 122 ; 23, 123) ayant un diamètre différent de façon correspondante qui coopère avec elle, et le siège de soupape (6) est disposé entre la surface de glissement (51, 151) ayant le petit diamètre et la surface de glissement (52, 152) ayant le grand diamètre.
